# EUROPEAN PATENT APPLICATION

(11) **EP 4 451 246 A1**
(43) Date of publication of application: **23.10.2024**
(21) Application number: 21968065.9
(22) Date of filing: 14.12.2021
(51) Int. Cl.: G08G 1/0969, G01C 21/36

(54) **AUDIO OUTPUT DEVICE, AUDIO OUTPUT METHOD, PROGRAM, AND STORAGE MEDIUM**

(71) Applicant: Pioneer Corporation, Tokyo 113-0021 (JP)
(72) Inventor: FUJIWARA, Toshiki, Kawagoe-shi, Saitama 350-8555 (JP); IIZAWA, Takashi, Kawagoe-shi, Saitama 350-8555 (JP)
(74) Representative: Viering, Jentschura & Partner mbB Patent- und Rechtsanwälte
(86) International application number: PCT/JP2021/046054
(87) International publication number: WO 2023/112148

(57) **Abstract**

The voice output device includes an acquisition unit configured to acquire a positioning accuracy of a GPS; and a voice guidance unit configured to perform a voice guidance using information that does not depend on a position of a mobile body, when the positioning accuracy is lower than a reference value.

## Description

### TECHNICAL FIELD

The present invention relates to techniques available in outputting voices.

### BACKGROUND TECHNIQUE

In a car navigation device, when the positioning accuracy of the GPS (Global Positioning System) decreases during route guidance, the positioning accuracy of the current position decreases and accurate guidance becomes difficult. Patent Document 1 proposes a method of providing an application execution device for a vehicle, which is capable of executing the application even when the GPS radio waves are blocked, in a case where a plurality of applications having different position accuracy requirements of the own vehicle are mounted on the vehicle.

### RELATED ART DOCUMENT

### PATENT DOCUMENT

Patent Document 1: Japanese Patent Application Laid-Open under No. 2017-106790

### SUMMARY OF THE INVENTION

### PROBLEM TO BE SOLVED BY THE INVENTION

However, even by Patent Document 1, it is not always possible to execute applications having relatively high position accuracy requirement, such as the applications for route guidance and distance-measurement, when the GPS radio waves are blocked.

The present invention has been made to solve the problem as described above, and its main object is to prevent the accuracy of the guidance from being lowered even when the positioning accuracy of the GPS is lowered.

### MEANS FOR SOLVING THE PROBLEM

An invention described in claim is a voice output device comprising: an acquisition unit configured to acquire a positioning accuracy of a GPS; and a voice guidance unit configured to perform a voice guidance using information that does not depend on a position of a mobile body, when the positioning accuracy is lower than a reference value.

An invention described in claim is a voice output method executed by a voice output device, comprising: acquiring a positioning accuracy of a GPS; and performing a voice guidance using information that does not depend on a position of a mobile body, when the positioning accuracy is lower than a reference value.

An invention described in claim is a program causing a computer to execute processing of: acquiring a positioning accuracy of a GPS; and performing a voice guidance using information that does not depend on a position of a mobile body, when the positioning accuracy is lower than a reference value.

### BRIEF DESCRIPTION OF THE DRAWINGS

[FIG. 1] FIG. 1 shows a configuration example of a voice output system according to an embodiment.
[FIG. 2] FIG. 2 is a block diagram showing a schematic configuration of a voice output device.
[FIG. 3] FIG. 3 shows an example of a schematic configuration of a server device.
[FIG. 4] FIG. 4 is a flowchart for explaining processing performed in the voice output device.

### MODES FOR EXERCISING THE INVENTION

According to one aspect of the present invention, there is provided a voice output device comprising: an acquisition unit configured to acquire a positioning accuracy of a GPS; and a voice guidance unit configured to perform a voice guidance using information that does not depend on a position of a mobile body, when the positioning accuracy is lower than a reference value.

The above voice output device acquires a positioning accuracy of a GPS; and performs a voice guidance using information that does not depend on a position of a mobile body, when the positioning accuracy is lower than a reference value. Therefore, even when the positioning accuracy of the GPS is deteriorated, the accuracy of the route guidance can be prevented from being lowered.

According to one mode of the above voice output device, the voice guidance unit uses information of a marker at a guidance point. In this mode, the voice output device is capable of performing the voice guidance using information independent of the position of the mobile body.

According to another mode of the above voice output device, the voice guidance unit outputs the voice guidance for a next guidance point, when the positioning accuracy becomes lower than the reference value. In this mode, the user can grasp the information on the next guidance point in advance.

According to still another mode of the above voice output device, the voice guidance unit outputs a message indicating that the positioning accuracy is deteriorated, when the positioning accuracy becomes lower than the reference value. In this mode, the user can grasp that the positioning accuracy is deteriorated.

According to still another mode of the above voice output device, the voice guidance unit outputs a message indicating that the positioning accuracy is deteriorated and the voice guidance for the next guidance point, when the positioning accuracy becomes lower than the reference value. In this mode, the user can grasp that the positioning accuracy is deteriorated, and also acquire the information on the next guidance point in advance.

According to still another mode of the above voice output device, the acquisition unit acquires the positioning accuracy based on map data. In this mode, the voice output device is capable of acquiring the positioning accuracy based on the map data.

According to another aspect of the present invention, there is provided a voice output method executed by a voice output device, comprising: acquiring a positioning accuracy of a GPS; and performing a voice guidance using information that does not depend on a position of a mobile body, when the positioning accuracy is lower than a reference value. Thus, even when the positioning accuracy of the GPS is deteriorated, the accuracy of the route guidance can be prevented from being lowered.

According to still another aspect of the present invention, there is provided a program causing a computer to execute processing of: acquiring a positioning accuracy of a GPS; and performing a voice guidance using information that does not depend on a position of a mobile body, when the positioning accuracy is lower than a reference value. By executing the program on a computer, the above-described voice output device can be realized. The program can be stored and handled on a storage medium.

### EMBODIMENT

A preferred embodiment of the present invention will be described below with reference to the attached drawings.

### [System configuration]

### (Overall configuration)

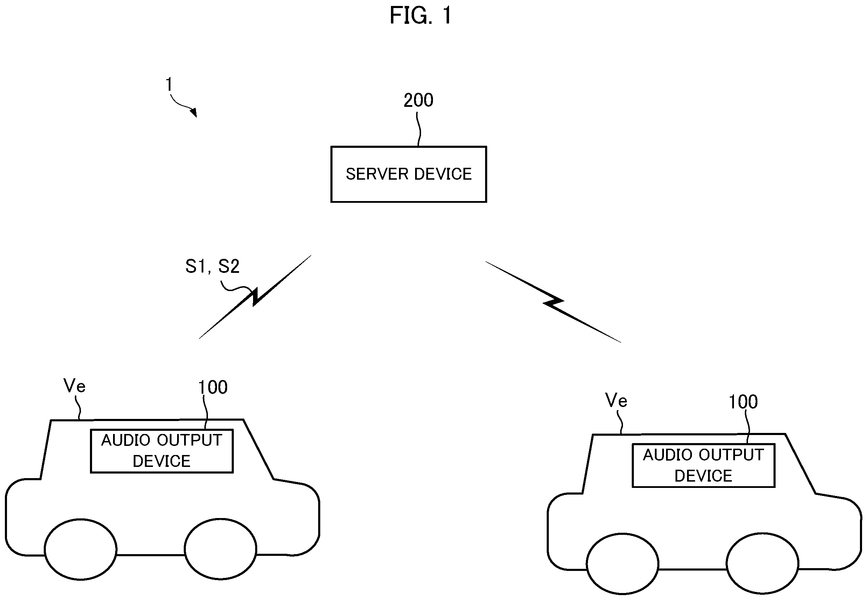

FIG. 1 is a diagram showing a configuration example of a voice output system according to the embodiment. The voice output system 1 according to the embodiment includes voice output devices 100 and a server device 200. The voice output device 100 is mounted on a vehicle Ve. The server device 200 communicates with a plurality of voice output devices 100 mounted on a plurality of vehicles Ve.

The voice output device 100 basically performs route guidance processing and information providing processing for a user who is a passenger of the vehicle Ve. For example, when a destination or the like is inputted by the user, the voice output device 100 transmits an upload signal S1 including the position information of the vehicle Ve and the information on the designated destination to the server device 200. The server device 200 refers to the map data, calculates a route to the destination, and transmits a control signal S2 indicating the route to the destination to the voice output device 100. The voice output device 100 performs the route guidance for the user by the voice output, based on the received control signal S2.

Also, the voice output device 100 provides various kinds of information to the user by interacting with the user. For example, when the user makes an information request, the voice output device 100 supplies the server device 200 with the upload signal S1 including information indicating the content or type of the information request and information about the driving state of the vehicle Ve. The server device 200 acquires and generates the data requested by the user, and transmits it to the voice output device 100 as the control signal S2. The voice output device 100 provides the received information to the user by the voice output.

### (Voice output device)

The voice output device 100 moves with the vehicle Ve, and provides voice-based route guidance so that the vehicle Ve travels along the guidance route. Note that "voice-based route guidance" refers to the route guidance in which the user can grasp information required for driving the vehicle Ve along the guidance route at least from voice only, and does not exclude that the voice output device 100 supplementally displays a map or the like around the current position. In the present embodiment, the voice output device 100 outputs various information related to the driving, such as a point on the route at which the guidance is required (also referred to as a "guidance point"), by voice. Here, the guidance point corresponds to, for example, an intersection with a right and left turn of the vehicle Ve, or other important passing points for the vehicle Ve to travel along the guidance route. The voice output device 100 performs voice guidance about the guidance point such as the distance from the vehicle Ve to the next guidance point and the direction of travel at the guidance point, for example. Hereinafter, the voice related to the guidance route is also called "route guidance voice".

The voice output device 100 is mounted, for example, on the upper part of a windshield or on a dashboard of the vehicle Ve. Incidentally, the voice output device 100 may be incorporated into the vehicle Ve.

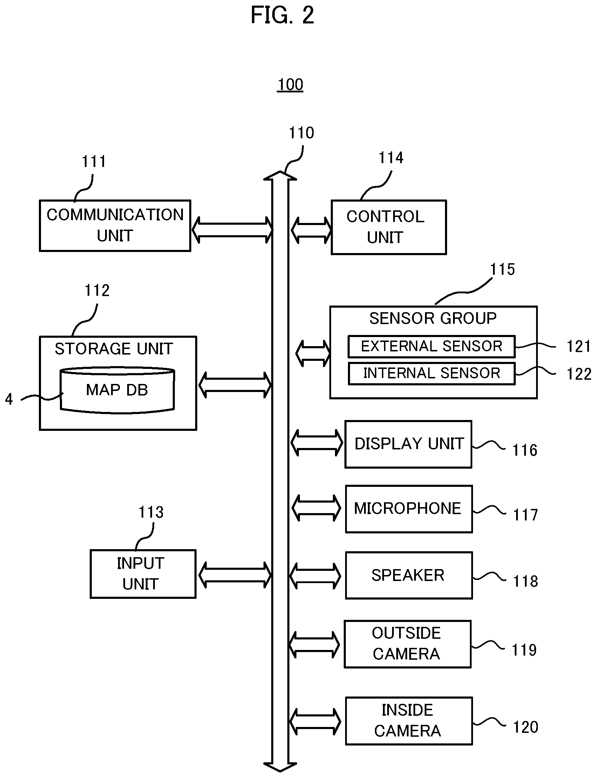

FIG. 2 is a block diagram showing the schematic configuration of the voice output device 100. The voice output device 100 mainly includes a communication unit 111, a storage unit 112, an input unit 113, a control unit 114, a sensor group 115, a display unit 116, a microphone 117, a speaker 118, an outside camera 119, and an inside camera 120. Each element in the voice output device 100 is connected to one another via a bus line 110.

The communication unit 111 performs data communication with the server device 200 based on the control of the control unit 114. The communication unit 111 may receive map data for updating a map DB (DataBase) 4 to be described later from the server device 200, for example.

The storage unit 112 is composed of various memories such as a RAM (Random Access Memory), a ROM (Read Only Memory), a non-volatile memory (including a hard disk drive, a flash memory, etc.). The storage unit 112 stores programs for the voice output device 100 to execute a predetermined processing. The above-described programs may include an application program for performing the route guidance, an application program for playing music, an application program for outputting contents (such as a TV) other than music, and the like. The storage unit 112 is also used as a working memory of the control unit 114. The programs to be executed by the voice output device 100 may be stored in a storage medium other than the storage unit 112.

The storage unit 112 stores the map database (hereinafter, the database is referred to as "DB") 4. The map DB 4 stores various data required for the route guidance. The map DB 4 stores, for example, road data representing the road network by a combination of nodes and links, and facility data indicating facilities that are candidates for a destination, a stopover place, and a landmark. The map DB 4 may be updated based on the map information that the communication unit 111 receives from the map management server under the control of the control unit 114.

The input unit 113 is a button, a touch panel, a remote controller, or the like for the user to make an operation. The display unit 116 is a display that performs display based on the control of the control unit 114. The microphone 117 collects the sound in the vehicle Ve, particularly the utterance of the driver or the like. The speaker 118 outputs route guidance voices to the driver or the like.

The sensor group 115 includes an external sensor 121 and an internal sensor 122. The external sensor 121 includes one or more sensors, such as a lidar, radar, ultrasonic sensor, infra-red sensor, sonar, and the like, for recognizing the surrounding environment of the vehicle Ve. The internal sensor 122 is a sensor that performs positioning of the vehicle Ve, and is a GNSS (Global Navigation Satellite System) receiver, a gyro sensor, an IMU (Inertial Measurement Unit), a vehicle speed sensor, or the combination thereof, for example. The sensor group 115 may include a sensor by which the control unit 114 can derive the position of the vehicle Ve directly or indirectly (i.e., by performing an estimation process) from the outputs of the sensor group 115.

The outside camera 119 is a camera for shooting the outside of the vehicle Ve. The outside camera 119 may be only a front camera that shoots the front of the vehicle, may include a rear camera that shoots the rear of the vehicle in addition to the front camera, and may be an omnidirectional camera that can shoot all around the vehicle Ve. On the other hand, the inside camera 120 is a camera for shooting the interior of the vehicle Ve, and is provided at a position capable of shooting at least the area around the driver's seat.

The control unit 114 includes a CPU (Central Processing Unit), a GPU (Graphics Processing Unit) and controls the entire voice output device 100. For example, the control unit 114 estimates the position (including the direction of the traveling direction) of the vehicle Ve based on the output of one or more sensors of the sensor group 115. When the destination is designated by the input unit 113 or the microphone 117, the control unit 114 generates the route information indicating the guidance route to the destination and performs the route guidance based on the route information, the estimated position information of the vehicle Ve, and the map DB 4. In this case, the control unit 114 outputs the route guidance voice from the speaker 118. The control unit 114 controls the display unit 116 to display information of the music being played back, video contents, or a map around the current position.

The processing executed by the control unit 114 is not limited to being implemented by software based on a program, but may be implemented by any combination of hardware, firmware, and software. The processing executed by the control unit 114 may be implemented by a user-programmable integrated circuit such as a FPGA (field-programmable gate array) or a microcomputer. In that case, the program executed by the control unit 114 in this embodiment may be realized by using this integrated circuit. Thus, the control unit 114 may be implemented by hardware other than a processor.

The configuration of the voice output device 100 shown in FIG. 2 is an example, and various changes may be made to the configuration shown in FIG. 2. For example, instead of storing the map DB 4 in the storage unit 112, the control unit 114 may receive information required for the route guidance from the server device 200 through the communication unit 111. In another example, instead of including the speaker 118, the voice output device 100 may be connected to a voice output unit configured separately from the voice output device 100 by an electrical or known communication means to output the voice from the voice output unit. In this case, the voice output unit may be a speaker provided in the vehicle Ve. In yet another example, the voice output device 100 may not include the display unit 116. In this case, the voice output device 100 may perform no control related to the display at all, or may perform a predetermined display by electrically connecting to the on-vehicle display unit provided in the vehicle Ve by wired or wireless communication. Similarly, instead of including the sensor group 115, the voice output device 100 may acquire information outputted from the sensors attached to the vehicle Ve from the vehicle Ve, using a communication protocol such as a CAN (Controller Area Network).

### (Server device)

Based on the upload signal S1 including the destination or the like received from the voice output device 100, the server device 200 generates the route information indicating the guidance route that the vehicle Ve should travel. Then, the server device 200 generates the control signal S2 related to the information output for the information request of the user based on the information request of the user indicated by the upload signal S1 transmitted by the voice output device 100 thereafter and the traveling state of the vehicle Ve. Then, the server device 200 transmits the generated control signal S2 to the voice output device 100.

In addition, the server device 200 generates content for providing information to and interacting with the user of the vehicle Ve and transmits the content to the voice output device 100. The information provision to the user is mainly a push-type information provision that starts from the server device 200 when the vehicle Ve reaches a predetermined driving state as a trigger. The interaction with the user is basically the pull-type interaction which starts from the inquiry and question from the user. However, the interactions with users may be initiated from the provision of push-type content.

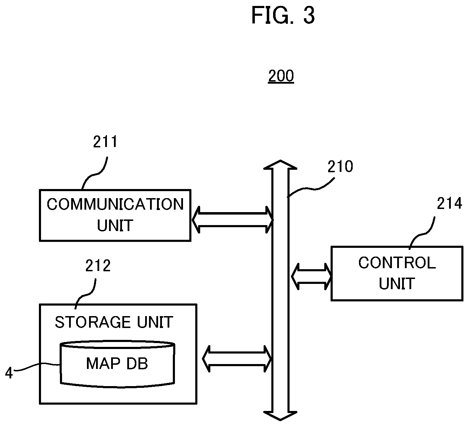

FIG. 3 is a diagram illustrating an example of the schematic configuration of the server device 200. The server device 200 mainly includes a communication unit 211, a storage unit 212, and a control unit 214. Each element in the server device 200 is interconnected via a bus line 210.

The communication unit 211 performs data communication with an external device such as the voice output device 100 based on the control of the control unit 214. The storage unit 212 is configured by various memories such as a RAM, a ROM, a non-volatile memory (including a hard disk drive, a flash memory, etc.). The storage unit 212 stores programs for the server device 200 to execute predetermined processing. The storage unit 212 includes the map DB 4.

The control unit 214 includes a CPU, a GPU and the like, and controls the entire server device 200. The control unit 214 operates together with the voice output device 100 by executing a program stored in the storage unit 212, and executes route guidance processing, information providing processing, or the like for the user. For example, the control unit 214 generates the control signal S2 related to the route information indicating the guidance route or the information output in response to the information request of the user, based on the upload signal S1 received from the voice output device 100 through the communication unit 211. Then, the control unit 214 transmits the generated control signal S2 to the voice output device 100 through the communication unit 211.

### [Push-type content provision]

Next, the push-type content provision will be described. The push-type content provision means that, when the vehicle Ve becomes a predetermined driving state, the voice output device 100 outputs, to the user, the contents related to the driving state. Specifically, the voice output device 100 acquires the driving state information indicating the driving state of the vehicle Ve based on the outputs of the sensor group 115 as described above and transmits the driving state information to the server device 200. The server device 200 stores the table data for providing push-type contents in the storage unit 212. The server device 200 refers to the table data. When the driving state information received from the voice output device 100 mounted on the vehicle Ve matches the trigger condition specified in the table data, the server device 200 acquires the contents to be outputted using the text data corresponding to the trigger condition, and transmits the contents to the voice output device 100. The voice output device 100 outputs the contents received from the server device 200. In this way, the contents corresponding to the driving state of the vehicle Ve are outputted to the user by voice.

The driving state information may include, for example, at least one piece of information that can be acquired based on the functions of each part of the voice output device 100, such as the position of the vehicle Ve, the direction of the vehicle Ve, the traffic information around the position of the vehicle Ve (including the speed regulation and the traffic jam information, etc.), the present time, the destination, and the like. The driving state information may include any of the sound obtained by the microphone 117 (other than the utterance of the user), the image captured by the outside camera 119, and the image captured by the inside camera 120. Further, the driving state information may include information received from the server device 200 through the communication unit 111.

### [Guidance according to positioning accuracy of GPS]

Next, the guidance according to the positioning accuracy of the GPS will be described. The guidance according to the positioning accuracy of the GPS means that the voice output device 100 calculates the positioning accuracy of the GPS and changes the guidance contents at the guidance point according to the result. Specifically, during the route guidance of the vehicle on which the voice output device 100 is mounted, the voice output device 100 measures the current position of the vehicle (hereinafter, referred to as the "own vehicle position") using the satellite signals of the GPS satellites, and calculates the positioning accuracy of the own vehicle position. Then, when the vehicle reaches the guidance point, the voice output device 100 determines whether or not the positioning accuracy of the GPS is equal to or higher than a predetermined reference value and provides the voice guidance to the user based on the determination result. Incidentally, as the factor of lowering the positioning accuracy, there are cases where the reception level of the GPS signal is lowered because the vehicle is driving underground or in a tunnel, or the GPS signal becomes a multipath.

Here, when the positioning accuracy of the GPS is not equal to or higher than a predetermined reference value, the accuracy of the current position of the vehicle or the accuracy of the distance from the current position of the vehicle to the guidance point is deteriorated. Therefore, the voice output device 100 performs the voice guidance using information that does not depend on the current position of the vehicle or the distance from the current position of the vehicle to the guidance point. The information that does not depend on the current position of the vehicle or the distance from the current position of the vehicle to the guidance point includes landmarks such as intersections and facilities. For example, when the positioning accuracy of the GPS is not equal to or higher than the predetermined reference value, the voice output device 100 performs the voice guidance such as "Turn right at the XX intersection."

On the other hand, when the positioning accuracy of the GPS is equal to or higher than the predetermined reference value, the voice output device 100 performs the voice guidance using the information of the current position of the vehicle and the distance from the current position of the vehicle to the guidance point. For example, when the positioning accuracy of the GPS is equal to or higher than the predetermined reference value, the voice output device 100 performs the voice guidance such as "Turn right 300m ahead."

### (Processing flow)

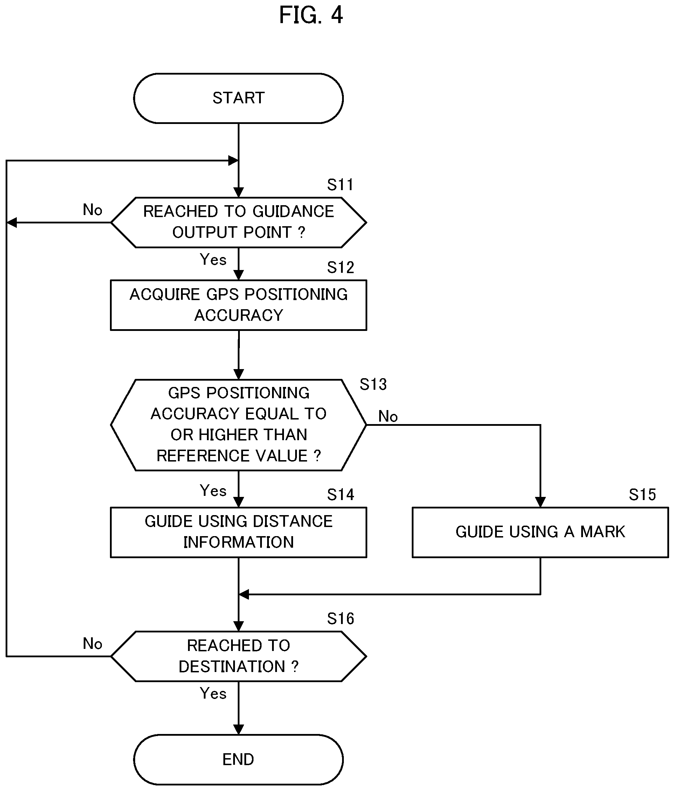

FIG. 4 is a flowchart for explaining processing performed in the voice output device.

This processing is realized by the control unit 114 shown in FIG. 2, which executes a program prepared in advance. Incidentally, this processing is repeatedly performed at predetermined time intervals during the route guidance by the voice output device 100.

The control unit 114 determines whether or not the vehicle has reached the guidance output point, based on the own vehicle position of the vehicle in which the voice output device 100 is mounted and the map information (step S11). The "guidance output point" is a point at which the voice guidance for the next guidance point should be outputted. Normally, the guidance output point is set at a point where the distance to the next guidance point becomes a predetermined distance or less. When the vehicle have not reached the guidance output point (step S11: No), the processing returns to step S11.

On the other hand, when the vehicle reaches the guidance output point (step S11: Yes), the control unit 114 acquires the positioning accuracy of the GPS (step S12), and determines whether or not the positioning accuracy of the GPS is equal to or higher than a predetermined reference value (step S13). When the positioning accuracy of the GPS is equal to or higher than the predetermined reference value (step S13: Yes), the control unit 114 performs the route guidance using the distance information (step S14). For example, the control unit 114 outputs a guidance voice such as "Turn right 300m ahead." as described above. On the other hand, when the positioning accuracy of the GPS is not equal to or higher than the predetermined reference value (step S13: No), the control unit 114 performs the route guidance using a mark such as an intersection (step S15). For example, the control unit 114 outputs a voice guidance such as "Turn right at XX intersection." as described above.

Next, the control unit 114 determines whether or not the vehicle has reached the destination on the basis of the own vehicle position and the information of the guidance route set in advance (step S16). When the vehicle has not reached the destination (step S16: No), the processing returns to step S11 and the processing continues. On the other hand, when the vehicles have reached the destination (step S16: Yes), the processing ends.

### [Modifications]

Next, description will be given of modifications suitable for the above-described embodiment. These modifications can be applied to the above-described embodiment in any combination.

### (Modification 1-1)

In the above-described embodiment, the voice output device 100 determines whether or not the positioning accuracy of the GPS is equal to or higher than the predetermined reference value and performs the voice guidance based on the determination result, when it reaches the guidance output point. However, the application of the present invention is not limited to this. For example, the voice output device 100 may constantly perform determination as to whether or not the positioning accuracy of the GPS is equal to or higher than the predetermined reference value. Then, when the positioning accuracy of the GPS becomes lower than the predetermined reference value, the voice output device 100 outputs the voice guidance for the next guidance point, regardless of whether or not it is the timing for the voice guidance. In this case, the information for the next guidance point should be the information that does not depend on the current position of the vehicle and the distance from the current position of the vehicle to the guidance point. Thus, even when the vehicle enters an area where the positioning accuracy of the GPS is low, the user can grasp the next guidance points in advance, and the anxiety during driving may be reduced.

### (Modification 1-2)

Similarly to the above-described modification 1-1, the voice output device 100 may constantly perform determination as to whether or not the positioning accuracy of the GPS is equal to or higher than the predetermined reference value. When the positioning accuracy of the GPS becomes lower than the predetermined reference value, the voice output device 100 may output a voice guidance notifying that the positioning accuracy of the GPS is lowered. For example, the voice output device 100 performs a voice guidance such as "The positioning accuracy of the GPS is deteriorated." when the positioning accuracy of the GPS becomes lower than the predetermined reference value. Thus, the user can grasp that the positioning accuracy is deteriorated.

### (Modification 1-3)

Furthermore, the modification 1-1 and the modification 1-2 described above may be combined. That is, the voice output device 100 constantly determines whether or not the positioning accuracy of the GPS is equal to or higher than the predetermined reference value. When the positioning accuracy of the GPS becomes lower than the predetermined reference value, the voice output device 100 may output the voice guidance notifying that the positioning accuracy of the the GPS is lowered and notifying the information of the next guidance point. For example, when the positioning accuracy of the GPS becomes lower than the predetermined reference value, the voice output device 100 outputs a voice guidance such as "Since the positioning accuracy of the GPS is deteriorated, we will inform you of the next guidance point. Turn right at XX intersection". Further, the information that does not depend on the position of the vehicle may be added, such as "Since the positioning accuracy of the GPS is deteriorated, we will inform you of the next guidance point. Turn right at XX intersection where a convenience store YY exists." or "Since the positioning accuracy of the GPS is deteriorated, we will inform you of the next guidance point. Turn right at ZZ junction which is the first branching point in the tunnel." Thus, the user can know that the positioning accuracy is deteriorated, and the information about the next guidance point. This may reduce the anxiety of the user during operation.

### (Modification 2)

In the above-described embodiment, the voice output device 100 calculates the positioning accuracy for the current position and determines whether or not the positioning accuracy of the GPS is equal to or higher than the predetermined reference value. However, the application of the present invention is not limited this. For example, the voice output device 100 may acquire the positioning accuracy from the map data of the server device 200. Specifically, the voice output devices 100 mounted on plural vehicles Ve transmit the positioning accuracy calculated during the route guidance to the server device 200, and the server device 200 reflects the received positioning accuracy to the map data in advance. Then, the voice output device 100 may acquire the positioning accuracy from the above-described map data at the time of subsequent route guidance, and perform voice guidance to the user based on the positioning accuracy thus acquired.

In this case, when the user specifies the destination and the server device 200 determines the route to the destination, the server device 200 can know in which section on the guidance route the positioning accuracy of the GPS is high and in which section the positioning accuracy of the GPS is low, by referring to the map data. Therefore, even if the server device 200 does not receive the information on the positioning accuracy of the GPS at the position of the vehicle Ve from the voice output device 100, the server device 200 can perform the guidance using the distance information in the section in which the positioning accuracy of the GPS is high in the map data, and perform the guidance using the mark in the section in which the positioning accuracy of the GPS is low.

### (Modification 3)

If a plurality of guidance points exist in a location where the sections with low GPS positioning accuracy continues, such as a long tunnel, the voice output device 100 cannot update its own vehicle position within the above-described sections and cannot provide the voice guidance about each guidance point. Therefore, the voice output device 100 may update the own vehicle position by voice operation by the user to provide the voice guidance of information on the next guidance point. For example, in a case where a plurality of guidance points exist in a long tunnel, when the vehicle Ve passes a guidance point in the tunnel, the user may utter that the vehicle Ve has passed the guidance point to notify it to the voice output device 100. The voice output device 100 updates the own vehicle position based on the utterance of the user and provides the voice guidance about the next guidance point in the tunnel. This enables the user to grasp the next guidance points even when the sections with low GPS positioning accuracy continues.

In the above-described embodiment, the program can be stored using various types of non-transitory computer-readable medium and supplied to a controller or the like that is a computer. The non-transitory computer-readable medium includes various types of tangible storage medium. Examples of the non-transitory computer-readable medium include a magnetic storage medium (e.g., a flexible disk, a magnetic tape, a hard disk drive), a magneto-optical storage medium (e.g., a magneto-optical disk), a CD-ROM (Read Only Memory), a CD-R, a CD-R/W, a solid-state memory (e.g., a mask ROM, a PROM (Programmable ROM), an EPROM (Erasable PROM), a flash ROM, and a RAM (Random Access Memory)).

While the present invention has been described with reference to the embodiments, the present invention is not limited to the above embodiments. Various modifications that can be understood by a person skilled in the art within the scope of the present invention can be made to the configuration and details of the present invention. That is, the present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

### DESCRIPTION OF REFERENCE NUMBERS

100 Voice output device
200 Server device
111, 211 Communication unit
112, 212 Storage unit
113 Input unit
114,214 Control unit
115 Sensor group
116 Display unit
117 Microphone
118 Speaker
119 Outside camera
120 Inside camera

## Claims

1. A voice output device comprising:
an acquisition unit configured to acquire a positioning accuracy of a GPS; and
a voice guidance unit configured to perform a voice guidance using information that does not depend on a position of a mobile body, when the positioning accuracy is lower than a reference value.

2. The voice output device according to claim 1, wherein the voice guidance unit uses information of a marker at a guidance point.

3. The voice output device according to claim 1 or 2, wherein the voice guidance unit outputs the voice guidance for a next guidance point, when the positioning accuracy becomes lower than the reference value.

4. The voice output device according to claim 1 or 2, wherein the voice guidance unit outputs a message indicating that the positioning accuracy is deteriorated, when the positioning accuracy becomes lower than the reference value.

5. The voice output device according to claim 1 or 2, wherein the voice guidance unit outputs a message indicating that the positioning accuracy is deteriorated and the voice guidance for the next guidance point, when the positioning accuracy becomes lower than the reference value.

6. The voice output device according to any one of claims 1 to 5, wherein the acquisition unit acquires the positioning accuracy based on map data.

7. A voice output method executed by a voice output device, comprising:
acquiring a positioning accuracy of a GPS; and
performing a voice guidance using information that does not depend on a position of a mobile body, when the positioning accuracy is lower than a reference value.

8. A program causing a computer to execute processing of:
acquiring a positioning accuracy of a GPS; and
performing a voice guidance using information that does not depend on a position of a mobile body, when the positioning accuracy is lower than a reference value.

9. A storage medium which stores the program according to claim 8.
